# EUROPÄISCHE PATENTSCHRIFT

(11) **EP 0 784 894 B1**
(45) Veröffentlichungstag und Bekanntmachung des Hinweises auf die Patenterteilung: **15.03.2000**
(21) Anmeldenummer: 95931147.3
(22) Anmeldetag: 15.09.1995
(51) Int. Cl.: H04L 12/46

(54) **VERFAHREN UND ANORDNUNG ZUR ADRESSIERUNG VON TEILNEHMERN IN EINEM AUS MINDESTENS ZWEI SEGMENTEN BESTEHENDEN NETZWERK**
METHOD AND ARRANGEMENT FOR ADDRESSING USERS IN A NETWORK COMPRISING AT LEAST TWO SEGMENTS
PROCEDE ET DISPOSITIF D'ADRESSAGE D'UTILISATEURS DANS UN RESEAU COMPRENANT AU MOINS DEUX SEGMENTS

(30) Priorität: 29.09.1994 DE 4434952
(43) Veröffentlichungstag der Anmeldung: 23.07.1997
(73) Patentinhaber: SIEMENS AKTIENGESELLSCHAFT, 80333 München (DE)
(72) Erfinder: DÖBRICH, Udo, D-76307 Karlsbad (DE); BÜHLER, Reiner, D-76703 Kraichtal (DE)
(86) Internationale Anmeldenummer: DE9501277
(87) Internationale Veröffentlichungsnummer: WO9610308

(56) Entgegenhaltungen:
- EP-A- 0 537 408
- DE-A- 4 000 673
- COMPUTERS IN INDUSTRY, Bd. 22, Nr. 1, 1.Juni 1993 Seiten 25-29, XP 000381054 SVEDA M 'ROUTERS AND BRIDGES FOR SMALL AREA NETWORK INTERCONNECTION'

## Beschreibung

Die Erfindung bezieht sich auf ein Verfahren und eine Anordnung zur Adressierung von Teilnehmern in einem aus mindestens zwei Segmenten bestehenden Netzwerk nach dem Oberbegriff des Anspruchs 1 bzw. dem Oberbegriff des Anspruchs 4.

In der DIN 19245, Teil 1, ist das Übertragungsprotokoll des PROFIBUS beschrieben, der zu einem Netzwerk aus mehreren Segmenten zusammengeschaltet werden kann. Zwischen den einzelnen Segmenten sind Netzübergänge angeordnet, welche die Segmente verbinden, damit Teilnehmer an verschiedenen Segmenten miteinander kommunizieren können. Zur Adressierung der Empfangsteilnehmer enthalten Nachrichten eine Weginformation, in der zumindest die Adresse des Empfangsteilnehmers angegeben ist. An dieser Adresse erkennt der Empfangsteilnehmer, daß eine ankommende Nachricht für ihn bestimmt ist. Die Adresse kann eine individuelle Adresse sein, unter der nur ein einziger Teilnehmer angesprochen wird, oder eine Sammeladresse, unter der mehrere oder auch alle Teilnehmer im System angesprochen werden. Jeder Teilnehmer besitzt eine individuelle Adresse, die für das jeweilige Segment, an dem er angeschlossen ist, eindeutig ist.

Aus der DE-OS 40 00 673 ist bekannt, zur Übertragung von Nachrichten über Segmentgrenzen hinweg in der Weginformation die Teilnehmeradresse des Empfangsteilnehmers, die an seinem Segment gültig ist, sowie die Segmentadressen der Segmente, über welche die Nachricht weitergeleitet werden muß, einzutragen. Ein Sendeteilnehmer, der mit einem Empfangsteilnehmer kommunizieren möchte, muß somit in einem Speicher die erforderlichen Informationen über den vollständigen Weg der Nachricht abgelegt haben und diese in die Nachricht einfügen. Netzübergänge müssen bei jeder Nachricht überprüfen, ob die in der Weginformation enthaltenen Segmentnummern mit den Nummern der Segmente übereinstimmen, die sie verbinden, und gegebenenfalls die Nachricht weiterleiten. Dabei ist es von Nachteil, daß sich die Zahl der Segmentadressen in der Weginformation bei größeren Netzwerken entsprechend der Anzahl der an der Übertragung beteiligten Segmente erhöht und sich somit das Verhältnis von Nutzdatenlänge zur Länge der Nachricht verschlechtert. Zudem wird ein erheblicher Speicherplatz zum Ablegen der umfangreichen Weginformationen für sämtliche Teilnehmerverbindungen in den Teilnehmern benötigt. Zur Abhilfe ist in der obengenannten Schrift vorgeschlagen worden, zur Adressierung eines Empfangsteilnehmers in der Weginformation lediglich dessen Teilnehmeradresse und Segmentnummer anzugeben. Die Netzübergänge führen dann eine Liste der über sie erreichbaren Segmente und reichen eine Nachricht nur dann weiter, wenn in der Weginformation die Nummer eines erreichbaren Segmentes enthalten ist. Dieses Verfahren verringert zwar die für die Weginformation der Nachrichten erforderliche Datenmenge, es können aber Probleme auftreten, wenn sich die Netzwerkstruktur ändert oder ein Empfangsteilnehmer in ein anderes Segment verlegt wird.

Der Erfindung liegt die Aufgabe zugrunde, ein Verfahren zur Adressierung von Teilnehmern in einem aus mindestens zwei Segmenten bestehenden Netzwerk zu finden, bei dem ein gutes Verhältnis von Nutzdaten zur Länge der Nachricht erreicht wird und bei dem auf die Übertragung der Segmentnummer eines Empfangsteilnehmers auch bei Nachrichten, die über mehrere Segmente geleitet werden, verzichtet werden kann, sowie eine zur Durchführung des Verfahrens geeignete Anordnung zu schaffen.

Zur Lösung dieser Aufgabe weist das neue Verfahren bzw. die neue Anordnung der eingangs genannten Art die im kennzeichnenden Teil des Anspruchs 1 bzw. des Anspruchs 4 genannten Merkmale auf. Vorteilhafte Weiterbildungen des neuen Verfahrens sind in den Unteransprüchen angegeben. Erfindungsgemäß wird eine Nachricht, die für einen Empfangsteilnehmer in einem anderen Segment bestimmt ist, vom Sender der Nachricht an den betreffenden, am selben Segment angeschlossenen Netzübergang mit einer Kennung der Teilnehmerverbindung für den Netzübergang adressiert. Der Netzübergang kann durch die Kennung der Teilnehmerverbindung die Adresse, an welche die Nachricht weitergeleitet werden muß, mit Hilfe von im Netzübergang hinterlegten Informationen ermitteln und die Nachricht weiterleiten. Wenn ein weiterer Netzübergang dazwischen liegt, wird dieser adressiert, d. h., dasselbe Prinzip wird noch einmal angewandt. Die Nachricht wird in den Netzübergängen jeweils mit der neuen Zieladresse versehen und an den nächsten Netzübergang bzw. vom letzten Netzübergang an den Empfangsteilnehmer übergeben.

Anhand der Zeichnungen, in denen Ausführungsbeispiele der Erfindung dargestellt sind, werden im folgenden die Erfindung sowie Ausgestaltungen und Vorteile näher erläutert.

Es zeigen:
- Figur 1: ein erfindungsgemäßes Netzwerk mit drei Segmenten und
- Figur 2: eine symbolische Darstellung der für einen Netzübergang möglichen Teilnehmerverbindungen.

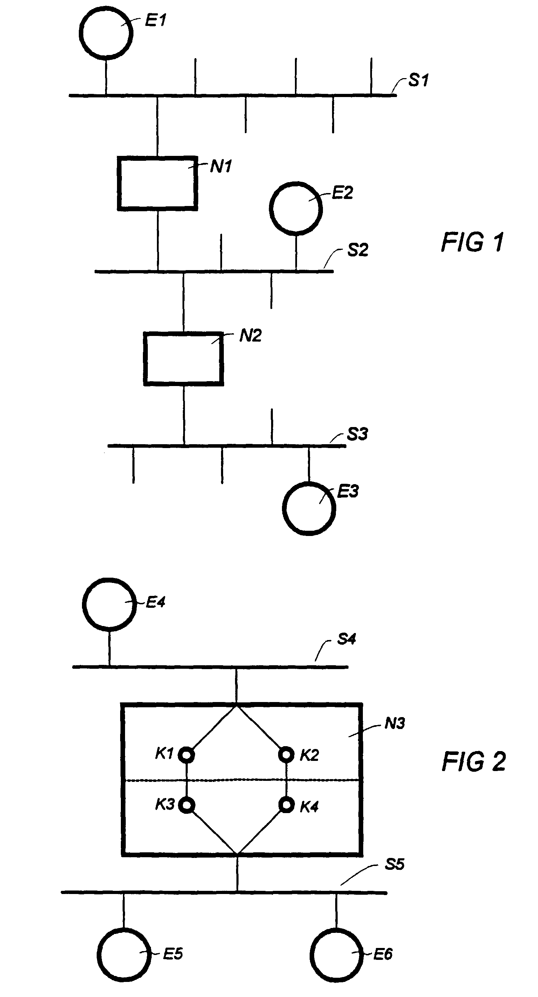

In einem Netzwerk nach Figur 1 befindet sich ein Teilnehmer E1 an einem Segment S1, das über einen Netzübergang N1 mit einem zweiten Segment S2 verbunden ist. Das Segment S2 wiederum ist über einen Netzübergang N2 mit einem dritten Segment S3 verbunden, an dem sich ein Teilnehmer E3 befindet. An dem Segment S2 ist ein Teilnehmer E2 angeschlossen. Will der Teilnehmer E1 als Sendeteilnehmer an den Teilnehmer E3 als Empfangsteilnehmer eine Nachricht senden, so muß er dazu die Kennung der entsprechenden Teilnehmerverbindung wissen und daß E3 über den Netzübergang N1 erreichbar ist. E1 adressiert daher N1 in Segment S1 und überträgt in einer Weginformation die Kennung der Teilnehmerverbindung an N1. In N1 ist die Information hinterlegt, daß die Nachricht dieser Teilnehmerverbindung über N2 laufen muß und welche Kennung die Teilnehmerverbindung für N2 hat. Er fügt daher diese Kennung in die Nachricht ein und adressiert die Nachricht in Segment S2 an den Netzübergang N2. Der Netzübergang N2 schließlich kennt für diese Teilnehmerverbindung die Adresse des Empfangsteilnehmers E3, da dieser am selben Segment angeschlossen ist, und leitet die Nachricht an diesen weiter. Vorteilhaft ist dabei, daß jeder Teilnehmer einen oder mehrere andere Teilnehmer in einem anderen Segment ansprechen kann, ohne deren Lage im Netzwerk oder deren Adresse am Segment zu kennen. Er muß lediglich wissen, über welchen Netzübergang der oder die betreffenden Teilnehmer erreichbar sind, also die Adresse dieses Netzübergangs am eigenen Segment und die Kennung der Teilnehmerverbindung. Ein weiterer Vorteil ist darin zu sehen, daß die Funktionalität des Empfangsteilnehmers aus der Sicht des Sendeteilnehmers in dem Netzübergang zu liegen scheint, der sich am eigenen Segment befindet. Die Kennung der Teilnehmerverbindung ist vergleichbar mit einem beispielsweise aus der DIN 19245, Teil 1, bekannten Dienstzugangspunkt (LSAP - Link Service Access Point) und kann auch in entsprechender Weise übertragen werden. Wie in Empfangsteilnehmern, in denen durch die Adreßerweiterung mit einem LSAP verschiedene Dienste oder Funktionen des Empfangsteilnehmers adressiert werden, können mit der Kennung der Teilnehmerverbindung über einen Netzübergang die in den Empfangsteilnehmern konzentrierten Funktionen aufgerufen werden. Für den Sendeteilnehmer scheinen diese Dienste im Netzübergang konzentriert zu sein. Daher braucht jeder Teilnehmer nur die anderen Teilnehmer einschließlich der Netzübergänge zu kennen, die an seinem eigenen Segment angeschlossen sind. Die Struktur des gesamten Netzwerkes oder der Segmente, die hinter einem Netzübergang liegen, ist für ihn verborgen und wird nicht benötigt.

Allerdings muß jeder Netzübergang beim Eintreffen einer Nachricht wissen, wohin, d. h. an welche Adresse am anderen Segment, und mit welcher Kennung der Teilnehmerverbindung er sie weiterleiten muß. Dazu benötigt er einen Speicherbereich, aus dem für jede Teilnehmerverbindung die auf dem anderen Segment gültige Adressierung des Empfangsteilnehmers abgeleitet werden kann. Dieser Speicherbereich wird im folgenden Durchschalttabelle genannt. Die genaue Form der Durchschalttabelle ist nicht festgelegt. Wenn ein Sendeteilnehmer mit mehreren Empfangsteilnehmern nacheinander kommunizieren will, unterhält der Netzübergang mehrere Teilnehmerverbindungen für diesen Sendeteilnehmer. Für jede dieser Teilnehmerverbindungen enthält die Durchschalttabelle einen Eintrag.

In Figur 2 ist ein Beispiel für einen Netzübergang N3 dargestellt, der mehrere Teilnehmerverbindungen unterhält. Ein Segment S4 mit einem Teilnehmer E4 ist über den Netzübergang N3 mit einem Segment S5, an dem Teilnehmer E5 und E6 angeschlossen sind, verbunden. Für jede mögliche Teilnehmerverbindung wurde in dem Netzübergang N3 ein Kommunikationskanal eingerichtet. Eine Nachricht des Teilnehmers E4 als Sendeteilnehmer an den Teilnehmer E5 als Empfangsteilnehmer wird zunächst auf dem Segment S4 an den Netzübergang N3, der an dem Segment S4 die Adresse 21 hat, gesendet. Gleichzeitig wird an den Netzübergang N3 eine Kennung der Teilnehmerverbindung K1 übertragen. Anhand der Durchschalttabelle, in der für diesen Kommunikationskanal die Adresse 9 des Empfangsteilnehmers E5 am Segment S5 abgelegt ist, wird die Zieladresse der Nachricht am Segment S5 ermittelt und die Nachricht weitergeleitet. Eine Nachricht an den Teilnehmer E6 adressiert der Teilnehmer E4 ebenfalls an den Netzübergang N3 mit der Adresse 21 am Segment S4, fügt dieser aber K2 als Kennung der Teilnehmerverbindung hinzu. Entsprechend einem weiteren Eintrag in der Durchschalttabelle für diesen Kommunikationskanal leitet der Netzübergang N3 diese Nachricht an die Adresse 16 des Empfangsteilnehmers E6 auf dem Segment S5 weiter. Wenn umgekehrt der Teilnehmer E5 eine Nachricht an den Teilnehmer E4 senden will, adressiert er die Nachricht an die Adresse 3 des Netzübergangs N3 am Segment S5 und teilt ihm die Kennung für die Teilnehmerverbindung K3 mit. Unter der Kennung K3 findet der Netzübergang N3 die Adresse 7 des Empfangsteilnehmers E4 und überträgt dann diesem die Nachricht. In entsprechender Weise läuft die Übertragung einer Nachricht vom Sendeteilnehmer E6 zum Empfangsteilnehmer E4 unter der Verwendung der Kennung der Teilnehmerverbindung K4 ab.

Empfänger einer Nachricht können auch Gruppen von Teilnehmern oder alle übrigen Teilnehmer im Netzwerk sein.

Die Erfindung hat den Vorteil, daß die Teilnehmer E1 ... E6 dadurch entlastet werden, daß sie im Unterschied zu den bekannten Lösungen keine Pfadinformation in Form von Listen der Segmentadressen für die Verbindungen zu anderen Teilnehmern abspeichern müssen. Ebenso benötigen sie keinerlei Informationen über den Aufbau des Netzwerks. Diese Information ist im Netzwerk verteilt und nur da vorhanden, wo sie gebraucht wird, nämlich in den Netzübergängen N1 ... N3. Eine Vereinfachung der Teilnehmer E1 ... E6 wird auch dadurch erreicht, daß sie zwischen der intrasegmentären, d. h. im selben Segment ablaufenden, und der extrasegmentären Kommunikation, die über Segmentgrenzen hinweg abgewickelt wird, nicht unterscheiden müssen. Bei bisherigen Verfahren, bei denen die Teilnehmer die Segmentadresse des Empfangsteilnehmers der Weginformation einer Nachricht hinzufügen, müssen Teilnehmer, die nur auf die Kommunikation in einem Segment eingestellt sind und nicht mit Segmentadressen arbeiten können, im Falle eines nachträglichen Ausbaus des Netzwerks auf mehrere Segmente entweder aufgerüstet, beispielsweise durch neue Programmierung, oder durch neue Geräte ersetzt werden, damit sie auch mit Teilnehmern aus anderen Segmenten kommunizieren können. Bei dem erfindungsgemäßen Verfahren ist das nicht notwendig. Ein Teilnehmer, der eine LSAP-Adreßerweiterung zuläßt, braucht für die Kommunikation über Segmentgrenzen hinweg keine Funktionserweiterungen. Die Auswirkungen von Adreßänderungen und Änderungen der Netzwerkstruktur, z. B. Änderungen von Segmentnummern, Hinzufügen neuer Segmente, Verlegen eines Teilnehmers in ein anderes Segment, bleiben auf die unmittelbare Umgebung, d. h. auf die betroffenen Segmente, beschränkt. Eine derartige Änderung hat auf die Teilnehmer an den anderen Segmenten keinerlei Auswirkungen. Bei den bekannten Verfahren, die mit Segmentadressen in der Weginformation arbeiten, müssen auch in den Teilnehmern an anderen Segmenten, die mit den direkt betroffenen Teilnehmern kommunizieren, die Segment- oder Teilnehmeradressen zur Adressierung der Empfangsteilnehmer geändert werden. Die Erfindung kann auch auf Netzwerke angewendet werden, die sich aus verschiedenartigen Segmenten zusammensetzen, da in den Netzübergängen eine Anpassung an eine andere Kommunikationsart stattfinden kann. Über die Netzübergänge sind die Eigenschaften der unterschiedlichen Teilnetze entkoppelt. Darüber hinaus ist bei der erfindungsgemäßen Adressierung der Aufwand in den Teilnehmern kleiner, da diese in einem Eingangsfilter der Nachrichten lediglich die am jeweiligen Segment gültige Adresse auswerten müssen, um zu erkennen, ob die Nachricht für sie bestimmt ist. Eine Auswertung weiterer Adressen, beispielsweise einer Segmentadresse, ist nicht erforderlich.

Die Durchschalttabellen können prinzipiell zwar manuell erstellt und in die Netzübergänge geladen werden, es ist aber auch möglich, sie nach dem folgenden Verfahren automatisch in den Netzübergängen zu erzeugen. Voraussetzung des Verfahrens ist, daß jeder Teilnehmer eine Kennzeichnung besitzt, die im gesamten Netzwerk eindeutig ist. Beispielsweise soll im Netzwerk nach Figur 1 eine Teilnehmerverbindung zwischen dem Teilnehmer E1, der ein Leitsystem mit der Kennzeichnung L1 darstellt, und dem Teilnehmer E3, einem Temperatursensor mit der Kennzeichnung S11, aufgebaut werden, da das Leitsystem L1 den Temperaturwert des Sensors S11 für Regelungsaufgaben benötigt. Dazu sendet der Teilnehmer E1 eine spezielle Suchnachricht auf seinem eigenen Segment S1 aus, in der neben seiner am Segment S1 gültigen Senderadresse auch die Kennzeichnung S11 des gesuchten Temperatursensors und eine Kennung als Suchnachricht enthalten ist. Diese Nachricht wird von allen am Segment S1 angeschlossenen Teilnehmern einschließlich der Netzübergänge - im Netzwerk nach Figur 1 der Übersichtlichkeit wegen nur vom Netzübergang N1 - ausgewertet. Der Teilnehmer, dessen Kennzeichnung mit der gesendeten übereinstimmt, antwortet an den suchenden Teilnehmer E1, also in diesem Fall keiner, da der Teilnehmer E3 nicht an das Segment S1 angeschlossen ist. Eine Suchnachricht muß von allen am Segment angeschlossenen Netzübergängen durchgelassen werden, damit sie alle Teilnehmer im Netzwerk erreichen kann. Da zu diesem Zeitpunkt die Durchschalttabellen nur teilweise oder noch gar nicht existieren, läuft sie über einen besonderen Kommunikationskanal, der von Anfang an funktionstüchtig ist und keinen Eintrag in der Durchschalttabelle erfordert. Im Ausführungsbeispiel leitet also der Netzübergang N1 die von E1 gesendete Suchnachricht auf das Segment S2 weiter. Gleichzeitig speichert er die am Segment S1 gültige Adresse des Teilnehmers E1 für einen vorgegebenen Zeitraum zwischen und fügt seine eigene am Segment S2 gültige Adresse in die Suchnachricht ein. Der Teilnehmer E2 verarbeitet die Suchnachricht, findet aber darin nicht seine Kennzeichnung und antwortet nicht. Der Netzübergang N2 wiederum fügt seine am Segment S3 gültige Adresse in die Suchnachricht ein, sendet auf das Segment S3 und speichert die am Segment S2 gültige Adresse des Netzübergangs N1 zwischen. Der Teilnehmer E3 empfängt schließlich die Suchnachricht und erkennt darin seine Kennzeichnung S11 wieder. Er sendet eine Antwortnachricht an den Netzübergang N2 mit seiner am Segment S3 gültigen Adresse. Beim Empfang der Antwortnachricht legt der Netzübergang N2 in seiner Durchschalttabelle eine neue Kennung für eine Teilnehmerverbindung an und trägt die Weginformation ein, die er für eine auf dem Segment S3 gültige Adressierung des Teilnehmers E3 benötigt. Gleichzeitig sendet er an den Netzübergang N1 über das Segment S2 eine Antwortnachricht, in der er seine am Segment S2 gültige Adresse sowie die neue Kennung der Teilnehmerverbindung überträgt. Der Netzübergang N1 legt ebenfalls in seiner Durchschalttabelle eine neue Kennung für die Teilnehmerverbindung an und trägt die vom Netzübergang N2 empfangenen Daten ein. Der Netzübergang N1 schließlich sendet eine Antwortnachricht an den suchenden Teilnehmer E1, die seine Kennung der Teilnehmerverbindung sowie seine am Segment S1 gültige Adresse enthält. Mit Empfang der Antwortnachricht durch den Teilnehmer E1 ist die Durchschaltinformation in allen beteiligten Netzübergängen bereits hinterlegt, d. h., der Weg ist durchgeschaltet. Dieses Verfahren wird für jede benötigte Verbindung zwischen den Teilnehmern des Netzwerkes wiederholt. Somit werden die in den Netzübergängen benötigten Durchschalttabellen automatisch gebildet.

Vorteilhaft wird mit diesem Verfahren der Aufwand in den Teilnehmern zum Aufbau einer Teilnehmerverbindung reduziert. Wenn die Durchschalttabellen zunächst in einem Organisationssystem aufgrund der Antworten erstellt und anschließend in die Netzübergänge geladen würden, wäre ein erheblicher Speicheraufwand im Organisationssystem notwendig. Beim neuen Verfahren entfällt dieser Aufwand, da lediglich in den Netzübergängen die für die spezielle Teilnehmerverbindung relevanten Informationen der angeschlossenen Segmente und keine Durchschalttabelle für das gesamte Netzwerk benötigt werden. Auch der Zeitaufwand und die Netzbelastung ist geringer, da die Durchschalttabellen in den Netzübergängen selbst erstellt werden und nicht noch einmal zu ihnen übertragen werden müssen. Das neue Verfahren bedeutet auch eine Vereinfachung der Netzübergänge, da keine Übertragungsprozeduren für die Tabellen notwendig sind.

Im Unterschied zu einem Verfahren, bei dem die Tabelle geladen wird, muß ihre Form beim neuen Verfahren nicht exakt festgelegt werden. Da die Tabelle lokal im Netzübergang erstellt wird, ist das Verfahren in vorteilhafter Weise flexibler, wenn die Netzübergänge Segmente unterschiedlicher Art, beispielsweise mit voneinander verschiedenem Adreßaufbau, verbinden. Für die verschiedenen Übertragungsrichtungen können Weginformationen in die Durchschalttabelle eingetragen werden, deren Strukturen voneinander abweichen und den Eigenschaften des jeweiligen Segments optimal angepaßt sind. Es ist dabei von Vorteil, wenn für jede Übertragungsrichtung eine gesonderte Durchschalttabelle angelegt wird.

## Patentansprüche

1. Verfahren zur Adressierung von Teilnehmern in einem aus mindestens zwei Segmenten (S1, S2, S3) bestehenden Netzwerk, wobei zwischen den einzelnen Segmenten Netzübergänge (N1, N2) angeordnet sind, die in Abhängigkeit einer Weginformation, die zur Adressierung in Nachrichten enthalten ist, eine Nachricht von einem ersten Segment (S1) zu weiteren angeschlossenen Segmenten (S2, S3) weiterleiten,
**dadurch gekennzeichnet,**
- daß die Weginformation einer Nachricht, die über einen Netzübergang (N1) weitergeleitet werden muß, die im ersten Segment (S1) gültige Teilnehmeradresse des Netzübergangs (N1) und eine Adreßerweiterung enthält,
- daß in der Adreßerweiterung einer an den Netzübergang (N1) adressierten Nachricht eine Kennung der Teilnehmerverbindung enthalten ist, die die über den Netzübergang (N1) herzustellende Verbindung zwischen einem Sendeteilnehmer (E1) und mindestens einem Empfangsteilnehmer (E2, E3) im Netzwerk für den Netzübergang (N1) eindeutig kennzeichnet,
- daß der Netzübergang (N1) eine Nachricht zu einem weiteren Segment (S2) weiterleitet, wenn seine Teilnehmeradresse am ersten Segment (S1) mit der empfangenen übereinstimmt, und
- daß der Netzübergang (N1) in Abhängigkeit von der Kennung der Teilnehmerverbindung eine auf dem weiteren Segment (S2) gültige Weginformation zur Adressierung des Empfangsteilnehmers (E2, E3) in die Nachricht einfügt.

2. Verfahren nach Anspruch 1, **dadurch gekennzeichnet,**
- daß der Netzübergang (N1) die auf dem weiteren Segment(S2) gültige Weginformation einer Tabelle entnimmt, in der für jede über den Netzübergang (N1) herstellbare Verbindung ein Eintrag vorhanden ist.

3. Verfahren nach Anspruch 2, **dadurch gekennzeichnet,**
- daß jeder Teilnehmer im Netzwerk eine eindeutige Kennzeichnung zur Identifikation besitzt,
- daß zum Aufbau einer neuen Teilnehmerverbindung ein Sendeteilnehmer (S1) eine Suchnachricht absendet, welche zumindest seine am ersten Segment (S1) gültige Adresse und die Kennzeichnung zur Identifikation des Empfangsteilnehmers (E3), mit dem er Verbindung aufnehmen will, enthält,
- daß jeder Teilnehmer (E2, E3) diese Suchnachricht auswertet und überprüft, ob seine Kennzeichnung zur Identifikation mit der empfangenen übereinstimmt,
- daß Netzübergänge (N1) zwischenspeichern, von wem am ersten Segment gesucht wurde, die Suchnachricht auf alle weiteren angeschlossenen Segmente (S2) weiterleiten und ihre jeweils an dem weiteren Segment (S2) gültige Adresse einfügen,
- daß nur der Empfangsteilnehmer (E3), dessen Kennzeichnung zur Identifikation mit der empfangenen übereinstimmt, eine Antwortnachricht mit seiner am jeweiligen Segment (S3) gültigen Adresse auf dem Weg an den Sendeteilnehmer (E1) zurücksendet, der für die Teilnehmerverbindung benutzt werden soll, und
- daß Netzübergänge (N1, N2), die eine Antwortnachricht erhalten, einen Eintrag mit der gültigen Weginformation zur Adressierung des Empfangsteilnehmers (E3) unter einer Kennung der neuen Teilnehmerverbindung in ihrer Tabelle anlegen und die Antwortnachricht mit ihrer am jeweiligen Segment (S2, S3) gültigen Adresse und Kennung der neuen Teilnehmerverbindung weiterleiten.

4. Netzwerk zur Durchführung des Verfahrens nach einem der vorhergehenden Ansprüche, das aus mindestens zwei Segmenten (S1, S2, S3) besteht, wobei zwischen den einzelnen Segmenten Netzübergänge (N1, N2) angeordnet sind, die in Abhängigkeit einer Weginformation, die zur Adressierung in Nachrichten enthalten ist, eine Nachricht von einem ersten Segment (S1) zu weiteren angeschlossenen Segmenten (S2, S3) weiterleiten, **dadurch gekennzeichnet,**
- daß die Weginformation einer Nachricht, die über einen Netzübergang (N1) weitergeleitet werden muß, die im ersten Segment (S1) gültige Teilnehmeradresse des Netzübergangs (N1) und eine Adreßerweiterung enthält,
- daß in der Adreßerweiterung einer an den Netzübergang (N1) adressierten Nachricht eine Kennung der Teilnehmerverbindung enthalten ist, die die über den Netzübergang (N1) herzustellende Verbindung zwischen einem Sendeteilnehmer (E1) und mindestens einem Empfangsteilnehmer (E2, E3) im Netzwerk für den Netzübergang (N1) eindeutig kennzeichnet, und
- daß der Netzübergang (N1) derart ausgebildet ist, daß er eine Nachricht zu einem weiteren Segment (S2) weiterleitet, wenn seine Teilnehmeradresse mit der empfangenen übereinstimmt, und in Abhängigkeit von der Kennung der Teilnehmerverbindung eine auf dem weiteren Segment (S2) gültige Weginformation zur Adressierung des Empfangsteilnehmers (E2, E3) in die Nachricht einfügt.

## Claims

1. Method for addressing stations in a network comprising at least two segments (S1, S2, S3), wherein there are disposed between the individual segments network gateways (N1, N2) which pass on, as a function of an item of route information contained in messages for the purpose of addressing, a message from a first segment (S1) to further connected segments (S2, S3), characterized
- in that the route information of a message which has to be passed on via a network gateway (N1) contains the station address, valid in the first segment (S1), of the network gateway (N1) and an address extension,
- in that the address extension of a message addressed to the network gateway (N1) contains an identifier of the station connection which uniquely characterizes the connection to be set up via the network gateway (N1) between a transmitting station (E1) and at least one receiving station (E2, E3) in the network for the network gateway (N1),
- in that the network gateway (N1) passes on a message to a further segment (S2) if its station address on the first segment (S1) coincides with that received, and
- in that the network gateway (N1) inserts in the message, as a function of the identifier of the station connection, an item of route information valid on the further segment (S2), for the purpose of addressing the receiving station (E2, E3).

2. Method according to Claim 1, characterized
- in that the network gateway (N1) takes the route information that is valid on the further segment (S2) from a table in which there is an entry for each connection to be set up via the network gateway (N1).

3. Method according to Claim 2, characterized
- in that each station in the network has a unique identification coding,
- in that, to set up a new station connection, a transmitting station (S1) sends out a search message which contains at least its address valid on the first segment (S1) and the identification coding of the receiving station (E3) which it wishes to contact,
- in that each station (E2, E3) evaluates said search message and checks whether its identification coding coincides with that received,
- in that network gateways (N1) temporarily store who made the search on the first segment, pass on the search message to all the other connected segments (S2) and insert their respective valid address on the further segment (S2),
- in that only the receiving station (E3) whose identification coding coincides with that received sends back a response message with its address valid on the respective segment (S3) over the path to the transmitting station (E1), which path is intended to be used for the station connection, and
- network gateways (N1, N2) which receive a response message store an entry containing the valid path information for addressing the receiving station (E3) under an identifier of the new station connection in their table and pass on the response message containing their address valid on the respective segment (S2, S3) and identifier of the new station connection.

4. Network for carrying out the method according to one of the preceding claims, which comprises at least two segments (S1, S2, S3), wherein there are disposed between the individual segments network gateways (N1, N2) which, as a function of route information contained in the messages for the purpose of addressing, pass on a message from a first segment (S1) to further connected segments (S2, S3), characterized
- in that the route information of a message which has to be passed on via a network gateway (N1) which contains the station address, valid in the first segment (S1) of the network gateway (N1) and an address extension,
- in that the address extension of a message addressed to the network gateway (N1) contains an identifier of the station connection which uniquely characterizes the connection to be made via the network gateway (N1) between a transmitting station (E1) and at least one receiving station (E2, E3) in the network for the network gateway (N1), and
- in that the network gateway (N1) is designed in such a way that it passes on a message to a further segment (S2) if its station address coincides with that received and, as a function of the identifier of the station connection, inserts in the message an item of route information valid on the further segment (S2) for the purpose of addressing the receiving station (E2, E3).

## Revendications

1. Procédé d'adressage d'utilisateurs dans un réseau constitué d'au moins deux segments (S1, S2, S3), dans lequel il est prévu, entre les segments, des passerelles (N1, N2) qui retransmettent un message d'un premier segment (S1) à d'autres segments raccordés (S2, S3) en fonction d'une information d'acheminement contenue pour l'adressage dans des messages,
caractérisé par le fait que
- l'information d'acheminement d'un message, qui doit être retransmis par l'intermédiaire d'une passerelle (N1), contient l'adresse d'utilisateur, valable dans le premier segment (S1), de la passerelle (N1) et une extension d'adresse,
- l'extension d'adresse d'un message adressé à la passerelle (N1) contient un identificateur de liaison d'utilisateurs, qui caractérise sans équivoque pour la passerelle (N1) la liaison à établir par l'intermédiaire de la passerelle (N1) entre un utilisateur émetteur (E1) et au moins un utilisateur récepteur (E2, E3) du réseau,
- la passerelle (N1) retransmet un message vers un autre segment (S2) lorsque son adresse d'utilisateur dans le premier segment (S1) coïncide avec l'adresse reçue, et que
- la passerelle (N1) insère dans le message, en fonction de l'identificateur de liaison d'utilisateurs, une information d'acheminement valable dans l'autre segment (S2) et destinée à l'adressage de l'utilisateur récepteur (E2, E3).

2. Procédé selon la revendication 1, caractérisé par le fait que
- la passerelle (N1) prélève l'information d'acheminement valable sur l'autre segment (S2) d'un tableau dans laquelle il y a un enregistrement pour chaque liaison pouvant être produite par la passerelle (N1).

3. Procédé selon la revendication 2, caractérisé par le fait que
- chaque utilisateur dans le réseau a un identificateur univoque pour son identification,
- pour l'établissement d'une nouvelle liaison d'utilisateurs, un utilisateur émetteur (E1) envoie un message de recherche qui contient au moins son adresse, valable dans le premier segment (S1), et l'identificateur de l'utilisateur récepteur (E3) avec lequel il veut être en liaison,
- chaque utilisateur (E2, E3) évalue ce message de recherche et teste si son identificateur coïncide avec l'identificateur reçu,
- des passerelles (N1) mémorisent temporairement par qui dans le premier segment la recherche est effectuée, retransmettent le message de recherche à tous les autres segments raccordés (S2) et insèrent leur adresse valable respectivement dans l'autre segment (S2),
- seul l'utilisateur récepteur (E3) dont l'identificateur coïncide avec l'identificateur reçu renvoie un message de réponse avec son adresse, valable dans le segment respectif (S3), vers l'utilisateur émetteur (E1) sur le chemin qui doit être exploité pour la liaison d'utilisateurs, et que
- des passerelles (N1, N2) qui reçoivent un message de réponse préparent dans leur tableau un enregistrement avec l'information d'acheminement valable pour l'adressage de l'utilisateur récepteur (E3) sous un certain identificateur de la nouvelle liaison d'utilisateurs et retransmettent le message de réponse avec leur adresse, valable dans le segment respectif (S2, S3) et l'identificateur de la nouvelle liaison d'utilisateurs.

4. Réseau destiné à la mise en oeuvre du procédé selon l'une des revendications précédentes, constitué d'au moins deux segments (S1, S2, S3), selon lequel il est prévu entre les différents segments des passerelles (N1, N2) qui retransmettent un message d'un premier segment (S1) à d'autres segments raccordés (S2, S3) en fonction d'une information d'acheminement contenue pour l'adressage dans des messages, caractérisé par le fait que
- l'information d'acheminement d'un message, qui doit être retransmis par l'intermédiaire d'une passerelle (N1), contient l'adresse d'utilisateur, valable dans le premier segment (S1), de la passerelle (N1) et une extension d'adresse,
- l'extension d'adresse d'un message adressé à la passerelle (N1) contient un identificateur de liaison d'utilisateurs, qui caractérise sans équivoque pour la passerelle (N1) la liaison à établir par l'intermédiaire de la passerelle (N1) entre un utilisateur émetteur (E1) et au moins un utilisateur récepteur (E2, E3) du réseau, et que
- la passerelle (N1) est conçue de telle sorte qu'elle retransmet un message vers un autre segment (S2) lorsque son adresse d'utilisateur dans le premier segment (S1) coïncide avec l'adresse reçue et qu'elle insère dans le message, en fonction de l'identificateur de liaison d'utilisateurs, une information d'acheminement valable dans l'autre segment (S2) et destinée à l'adressage de l'utilisateur récepteur (E2, E3).
